(19) Europäisches Patentamt
European Patent Office
Office européen des brevets

(11) **EP 4 163 601 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(51) Internationale Patentklassifikation (IPC):
**G01D 5/244** (2006.01)   **G01D 18/00** (2006.01)
**G01D 3/02** (2006.01)

(21) Anmeldenummer: **22199205.0**

(52) Gemeinsame Patentklassifikation (CPC):
**G01D 5/2448; G01D 3/02; G01D 18/001**

(22) Anmeldetag: **30.09.2022**

(54) **MESSDATENPROZESSOR, POSITIONSMESSGERÄT UND COMPUTERIMPLEMENTIERTES VERFAHREN**

MEASUREMENT DATA PROCESSOR, POSITION MEASUREMENT DEVICE AND COMPUTER-IMPLEMENTED METHOD

PROCESSEUR DE DONNÉES DE MESURE, APPAREIL DE MESURE DE POSITION ET PROCÉDÉ MIS EN UVRE PAR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2021   DE 102021005044**

(43) Veröffentlichungstag der Anmeldung:
**12.04.2023   Patentblatt 2023/15**

(73) Patentinhaber: **Baumer Germany GmbH & Co. KG 78333 Stockach (DE)**

(72) Erfinder: **Hanke, Martin 10319 Berlin (DE)**

(74) Vertreter: **Strauss, Steffen Baumer Innotec AG Group Intellectual Property Hummelstrasse 17 8501 Frauenfeld (CH)**

(56) Entgegenhaltungen:
**EP-A1- 3 029 427       DE-B3-102020 102 065
US-A1- 2007 205 736**

**Beschreibung**

Die vorliegende Erfindung betrifft einen Messdatenprozessor, insbesondere, aber nicht ausschließlich für ein Positionsmessgerät mit einer magnetischen Maßverkörperung und einem Magnetfeldsensor. Ferner betrifft die vorliegende Erfindung ein Positionsmessgerät mit einem solchen Messdatenprozessor sowie ein computerimplementiertes Verfahren zum Korrigieren eines Positionsmessfehlers.

Für die Ermittlung von Winkel- bzw. Positionsinformationen kommen in der Industrie und Wissenschaft Positionsmessgeräte, wie beispielsweise Dreh- oder Lineargeber, zum Einsatz. Bei zahlreichen Anwendungen werden magnetische Positionsmessgeräte aufgrund ihrer Verschleiß- und Wartungsfreiheit bevorzugt genutzt. Derartige Positionsmessgeräte enthalten magnetische Maßverkörperungen sowie berührungslose Magnetfeldsensoren, welche Rohmessdaten für die Berechnung der Winkel- bzw. Positionsinformationen bereitstellen. Hierbei sind jedoch unmittelbar aus den Rohmessdaten berechnete Positionsmesswerte häufig fehlerbehaftet und stimmen nicht immer mit den tatsächlichen Winkeln bzw. Positionen überein.

Herkömmliche Korrekturmaßnahmen, wie z.B. statisch im jeweiligen Positionsmessgerät hinterlegte Korrekturwerte, welche Messabweichungen über einen Werksabgleich berücksichtigen, sind oft nicht ausreichend, da sie u.a. keine Kompensationsmöglichkeit für veränderliche und/oder äußere Einflüsse, die unter Werksbedingungen nicht vorlagen, bieten. Auch sind Korrekturmaßnahmen wie ein Werksabgleich an bestimmte Komponenten z.B. an die konkrete Maßverkörperung gebunden. Diese Zuordnungen müssen dann über die ganze Produktlebensdauer berücksichtigt werden.

Die Druckschrift EP 3 029 427 A1 betrifft eine Vorrichtung zur mechanisch absoluten Winkelbestimmung einer Welle einer Rotationsmaschine. Die Vorrichtung umfasst einen Magnetkranz mit einer Vielzahl magnetischer Pole einen ersten und zweiten Magnetfeldsensor und eine Auswerteeinheit, wobei die Magnetfeldsensoren eingerichtet sind, die im Zuge einer Rotation der Welle passierenden Magnetfelder der Pole des Magnetkranzes zu erfassen, und die Auswerteeinheit die Magnetfeldsignale der Magnetfeldsensoren miteinander zu vergleichen, fertigungsbedingte Unregelmässigkeiten des Magnetkranzes zu identifizieren, und anhand der identifizierten Unregelmässigkeiten eine mechanisch absolute Winkelbestimmung der Welle vorzunehmen.

Die Druckschrift DE 10 2020 102 065 B3 beschreibt ein Verfahren zur Erfassung einer Winkelposition bei dem ein periodisch erstes und zweites Sensorsignal an eine Auswerteeinheit ausgegeben wird. Die Auswerteeinheit berechnet in einem Auswerteschritt die Winkelposition über eine atan2-Funktion, wobei in einem Berechnungsschritt ein möglicher harmonischer Fehler als ein dem Sensorsignal überlagertes periodisches Fehlersignal angenommen und daraus ein Winkelfehler berechnet wird, der wiederum in einem dem Auswerteschritt nachfolgenden Korrekturschritt ausgeglichen wird. In einem dem Berechnungsschritt zugeordneten Parameterermittlungsschritt wird ferner eine Fehleramplitude des Fehlersignals berechnet und in einem dem Berechnungsschritt zugeordneten Winkelfehlerberechnungsschritt der Winkelfehler abhängig von der Fehleramplitude und der Signalamplitude berechnet.

Die Druckschrift US 2007/205736 A1 beschreibt eine Vorrichtung und ein Verfahren zur Erfassung einer Winkelposition einer magnetischen Welle. N Feldsensoren werden hierbei nebeneinander an festen Stellen relativ zum periodischen Feld der Welle positioniert, was 180/N relativen Phasenverschiebungen entspricht. Ein Interpolator vergleicht eine Darstellung der N gemessenen Sensorsignale mit mindestens zwei vorgegebenen Modellen, um ein Korrektursignal zu erzeugen, das eine weitere vordefinierte Position liefert.

Der vorliegenden Erfindung liegt deshalb die Aufgabe zugrunde, eine Möglichkeit zu schaffen, die es erlaubt, durch verbesserte oder zumindest zusätzliche Korrekturmaßnahmen die Genauigkeit von magnetischen Positionsmessgeräten zu erhöhen.

Diese Aufgabe wird erfindungsgemäß durch einen Messdatenprozessor gemäß dem unabhängigen Anspruch 1 gelöst.

Der Messdatenprozessor ist für ein Positionsmessgerät mit einer magnetischen Maßverkörperung aus aneinandergereihten Polen abwechselnder Polarität und einem Magnetfeldsensor zur Erzeugung von Spursignalen mit Periodendurchläufen beim Passieren der Pole geeignet. Der Messdatenprozessor ist ausgestaltet, Messdaten abzurufen, die für mindestens zwei Periodendurchläufe eines ersten und zweiten Spursignals des mit einer Polfrequenz relativ zu den Polen bewegten Magnetfeldsensors repräsentativ sind. Ferner ist der Messdatenprozessor ausgestaltet, aus den Messdaten für jeden der mindestens zwei Periodendurchläufe mindestens einen Phasenwinkel des ersten und zweiten Spursignals und mindestens einen, den Verlauf des ersten und zweiten Spursignals bei diesem Phasenwinkel charakterisierenden Kennwert zu berechnen.

Der Messdatenprozessor ist ausgestaltet, anhand eines Vergleichs wenigstens eines Teils der berechneten Kennwerte mindestens einen Periodenvergleichswert zu bestimmen, der einen periodenübergreifenden Unterschied des Verlaufs des ersten und zweiten Spursignals repräsentiert.

Ferner ist der Messdatenprozessor ausgestaltet, aus dem mindestens einen Periodenvergleichswert ein Korrektursignal zu bestimmen, wobei das Korrektursignal eine periodische Funktion oder eine Superposition periodischer Funktionen mit je einem Amplitudenfaktor, einem Frequenzfaktor und einer Phasenverschiebungskonstante ist, wobei der Amplitudenfaktor und die Phasenverschiebungskonstante jeweils abhängig von dem mindestens einen Periodenvergleichswert sind, und wobei der Frequenzfaktor ein von dem mindestens einen Periodenvergleichswert unabhängiger konstanter Wert ist, aus den Messdaten ein unkorrigiertes Positionssignal zu berechnen, und aus dem unkorrigierten Positionssignal und dem Korrektursignal ein korrigiertes Positionssignal zu berechnen.

Die Polfrequenz gibt die Anzahl der pro Zeiteinheit am Magnetfeldsensor passierenden Pole wieder und kann je nach Anwendung zeitlich konstant oder variabel sein. Bei der Superposition periodischer Funktionen kann es sich beispielsweise um eine Summe periodischer Funktionen handeln. Die periodischen Funktionen können vom Phasenwinkel des ersten und zweiten Spursignals abhängige Funktionen sein. Der jeweilige Amplitudenfaktor, die jeweilige Phasenverschiebungskonstante und der jeweilige Frequenzfaktor sind Parameter des Korrektursignals, deren Ermittlung weiter unten näher beschrieben wird.

Nachfolgend wird der Vorteil der vorliegenden Erfindung erläutert:
Der soeben erwähnte periodenübergreifende Unterschied im Spursignalverlauf wird hauptsächlich dadurch verursacht, dass benachbarte Pole der Maßverkörperung nicht exakt komplementär zueinander ausgebildet sind, z.B. wegen externer Magnetfelder und/oder herstellungsbedingter Pollängenunterschiede. Im Folgenden wird dieser Umstand als Polvarianz bezeichnet.

Da die Spursignale des Magnetfeldsensors von der Ausbildung der Magnetfelder der einzelnen Pole abhängig sind, führt die Polvarianz in aufeinanderfolgenden Signalperioden der Spursignale zu jeweils unterschiedlichen Verläufen und verfälscht somit den Wahrheitsgehalt des unkorrigierten Positionssignals. Wie eingangs bereits erörtert, lässt sich dieser Einfluss der Polvarianz auf das Positionssignal durch einen konstanten Korrekturwert selbst nicht ausreichend abbilden.

Da im erfindungsgemäßen Messdatenprozessor die Messdaten von mindestens zwei Periodendurchläufen bzw.-durchgängen herangezogen werden, können die Signalperioden vorteilhafterweise miteinander verglichen werden. Mithilfe des erfindungsgemäßen Messdatenprozessors, insbesondere über den mindestens einen Periodenvergleichswert kann somit das Ausmaß bzw. der Ausprägungsgrad der Polvarianz abgeschätzt werden. Darauf basierend kann der störende Einfluss der Polvarianz in Form des Korrektursignals approximiert und im korrigierten Positionssignal anschließend minimiert werden.

Folglich kann der erfindungsgemäße Messdatenprozessor zur Steigerung der Genauigkeit von magnetischen Positionsmessgeräten dienen und löst somit die eingangs zugrunde gelegte Aufgabe.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten möglichen Ausgestaltungsform kann der Messdatenprozessor ausgestaltet sein, das korrigierte Positionssignal durch Subtraktion des Korrektursignals vom unkorrigierten Positionssignal zu berechnen. Dies repräsentiert eine einfach umsetzbare Berechnungsart des korrigierten Positionssignals.

Um Rechenaufwand zu sparen kann der Messdatenprozessor ausgestaltet sein, das unkorrigierte Positionssignal aus den Messdaten und etwaigen bereits berechneten Phasenwinkeln zu berechnen. Beispielsweise kann der Messdatenprozessor ausgestaltet sein, die Anzahl der in den Messdaten enthaltenen vollständigen Periodendurchläufe zu ermitteln und daraus einen groben Positionsmesswert zu bestimmen. Ferner kann der Messdatenprozessor ausgestaltet sein, anhand des zuletzt berechneten Phasenwinkels einen feinen Positionsmesswert zu bestimmen. Der unkorrigierte Positionsmesswert ergibt sich dann aus einer Linearkombination, insbesondere aus der Summe von grobem Positionsmesswert und feinem Positionsmesswert.

Eine vielseitig einsetzbare Ausgestaltungsform ergibt sich, wenn der Messdatenprozessor ausgestaltet ist, die Messdaten direkt vom Magnetfeldsensor zu empfangen und/oder aus einem Messdatenspeicher auszulesen.

Gemäß einer weiteren möglichen Ausgestaltungsform kann das erste und zweite Spursignal in analoger und/oder digitaler Form vorliegen. Somit erweitert sich die Kompatibilität des erfindungsgemäßen Messdatenprozessors zu verschiedenen Schnittstellenarten des Magnetfeldsensors. Mit anderen Worten kann der Messdatenprozessor sowohl mit Magnetfeldsensoren, die analoge Spursignale ausgeben, als auch mit Magnetfeldsensoren, die digitale Spursignale ausgeben, kompatibel sein.

Bei Ausgestaltungsformen mit analogen Spursignalen kann der Messdatenprozessor ausgestaltet sein, zumindest das unkorrigierte Positionssignal ebenfalls analog zu berechnen. Bei Ausgestaltungsformen mit digitalen Spursignalen kann der Messdatenprozessor ausgestaltet sein, eine Mehrzahl von unkorrigierten Positionsmesswerten aus den Messdaten zu berechnen und das unkorrigierte Positionssignal aus den unkorrigierten Positionsmesswerten zu bilden.

Gemäß einer weiteren möglichen Ausgestaltungsform kann das erste Spursignal im Wesentlichen sinusförmig und das zweite Spursignal im Wesentlichen kosinusförmig sein. Vorzugsweise haben das erste und zweite Spursignal im Wesentlichen die gleiche Spursignalfrequenz. Mit anderen Worten stimmen das erste und zweite Spursignal in ihrer Periodenlänge überein. Der mindestens eine Phasenwinkel lässt sich dann vorteilhafterweise über eine inverse Winkelfunktion, insbesondere über die atan2-Funktion aus dem ersten und zweiten Spursignal einfach berechnen.

Ferner kann die Spursignalfrequenz des ersten und zweiten Spursignals der Polfrequenz entsprechen. Somit ist der erfindungsgemäße Messdatenprozessor vorteilhafterweise mit hochauflösenden Positionsmessgeräten, die z.B. AMR-Sensoren enthalten, bei denen die Periodenlänge der Spursignale mit der Pollänge der Maßverkörperung übereinstimmen, einsetzbar.

Referenzmessungen zeigen, dass sich der störende Einfluss der Polvarianz mit dem Korrektursignal gut approximieren lässt, wenn der jeweilige Amplitudenfaktor im

Korrektursignal proportional zum mindestens einen Periodenvergleichswert ist. Dies wird weiter unten noch näher erläutert.

Ferner approximiert das Korrektursignal den störenden Einfluss der Polvarianz gut, wenn die jeweilige Phasenverschiebungskonstante im Korrektursignal eine inverse Winkelfunktion des mindestens einen Periodenvergleichswerts ist. Dies wird weiter unten noch näher erläutert.

Erfahrungsgemäß lässt sich der störende Einfluss der Polvarianz mit dem Korrektursignal gut approximieren, wenn der jeweilige Frequenzfaktor in Abhängigkeit vom Typ des Magnetfeldsensors gewählt wird. Dies wird weiter unten noch näher erläutert.

Zur Verbesserung der Signalqualität kann der Messdatenprozessor ausgestaltet sein, eine Phasen-, Offset- und/oder Amplitudenanpassung des ersten und zweiten Spursignals durchzuführen. Beispielsweise kann dies über eine Phasen-, Offset- und Amplitudenregelung (kurz POAC für engl. *Phase, Offset, Amplitude Control*), wie sie aus dem Stand der Technik für Positionsmessgeräte bekannt ist und deshalb an dieser Stelle nicht beschrieben wird, erfolgen.

Vorzugsweise kann der Messdatenprozessor ausgestaltet sein, Werte der euklidischen Norm des ersten und zweiten Spursignals in Abhängigkeit des Phasenwinkels aus den Messdaten zu berechnen. Die euklidische Norm berechnet sich hierbei aus der Quadratwurzel der Summe der Quadrate der Signalwerte des ersten und zweiten Spursignals beim jeweiligen Phasenwinkel.

Ferner kann der Messdatenprozessor ausgestaltet sein Werte der euklidischen Norm des ersten und zweiten Spursignals zumindest teilweise für die Berechnung der Kennwerte zu verwenden. Weiterhin können die Werte der euklidischen Norm des ersten und zweiten Spursignals zumindest teilweise für die Phasen-, Offset- und/oder Amplitudenanpassung verwendet werden. Auch ist mit Werten der euklidischen Norm des ersten und zweiten Spursignals möglich eine Bewertung der Spursignale anhand von Schwellwerten durchzuführen, und damit zu prüfen, ob die Spursignale innerhalb eines sinnvollen Arbeitsbereiches liegen. Somit ergibt sich eine rechenaufwandsparende Synergie, da die berechneten Werte der euklidischen Norm sowohl in die Phasen-, Offset- und/oder Amplitudenanpassung als auch in der Bewertung der Spursignale, als auch in die Berechnung der Kennwerte einfließen können.

Hierbei kann der jeweilige Wert der euklidischen Norm direkt je einen Kennwert ergeben. Mit anderen Worten gleicht der jeweilige Kennwert, der den Verlauf des ersten und zweiten Spursignals bei einem Phasenwinkel charakterisiert, dem bei diesem Phasenwinkel berechneten Wert der euklidischen Norm des ersten und zweiten Spursignals. Diese Ausgestaltungsform ist vorteilhaft, da für die Berechnung der euklidischen Norm bereits vorgefertigte Rechenmodule weit verbreitet und leicht verfügbar sind. Alternativ kann der jeweilige Kennwert auch anders berechnet werden, beispielsweise als Summe der Quadrate der Signalwerte des ersten und zweiten Spursignals oder als Summe der Beträge der Signalwerte des ersten und zweiten Spursignals.Gemäß einer weiteren möglichen Ausgestaltungsform kann der Messdatenprozessor ausgestaltet sein, die Messdaten in Datengruppen aufzuteilen, wobei jede Datengruppe mehrere Datenpaare, die jeweils ein Signalwertepaar des ersten und zweiten Spursignals repräsentieren, umfasst, und wobei die Datenpaare einer Datengruppe jeweils zum selben Periodendurchlauf gehören. Ferner kann der Messdatenprozessor ausgestaltet sein, jedem Datenpaar einen Phasenwinkel innerhalb des Periodendurchlaufs, zu dem das jeweilige Datenpaar gehört, zuzuordnen. Außerdem kann der Messdatenprozessor ausgestaltet sein, die Datengruppen einzelnen Polen der Maßverkörperung zuzuordnen. Somit sind die Messdaten, aber auch alle auf den Messdaten basierenden weiteren Größen (z.B. Werte der euklidischen Norm, Periodenvergleichswert, Korrektursignal) den einzelnen Polen der Maßverkörperung zuordenbar.

Zum einen können so die Messdaten für beide Polaritäten (d.h. Nord- und Südpol) getrennt gemittelt und anhand dieser Mittelwerte das Korrektursignal berechnet werden. Alternativ kann das Korrektursignal auch nur jeweils für einen Nord- und einen Südpol repräsentativ berechnet und dann entsprechend auf alle anderen Nord- und Südpole getrennt angewandt werden. Selbstverständlich kann das Korrektursignal auch für alle Nord- und Südpole einzeln berechnet und einzeln angewandt werden.

Weiterhin kann der Messdatenprozessor so ausgestaltet sein, dass die POAC die zugeordneten Datengruppen verwendet.-Zum einen können so die Messdaten für beide Polaritäten (d.h. Nord- und Südpol) getrennt gemittelt und anhand dieser Mittelwerte die Phasen-, Offset- und/oder Amplitudenanpassungen für Nord- und Südpol getrennt durchgeführt werden. Alternativ können erst die Phasen-, Offset- und/oder Amplitudenanpassungen für jeden Pol einzeln berechnet und dann für beide Polaritäten getrennt gemittelt werden. Ferner alternativ können die Phasen-, Offset- und/oder Amplitudenanpassungen auch nur jeweils für einen Nord- und einen Südpol repräsentativ berechnet und dann entsprechend auf alle anderen Nord- und Südpole getrennt angewandt werden. Selbstverständlich können die Phasen-, Offset- und/oder Amplitudenanpassungen auch für alle Nord- und Südpole einzeln berechnet und einzeln angewandt werden.

Um den mindestens einen Periodenvergleichswert auf einfache Weise zu bestimmen, kann der Messdatenprozessor ausgestaltet sein, einen ersten Wert der euklidischen Norm der Spursignale aus einem ersten Datenpaar einer ersten Datengruppe zu berechnen, einen zweiten Wert der euklidischen Norm der Spursignale aus einem zweiten Datenpaar einer zweiten Datengruppe zu berechnen, wobei das erste und zweite Datenpaar im Phasenwinkel übereinstimmen oder zumindest annähernd übereinstimmen, und wobei die erste und zweite Datengruppe benachbarten Polen zugeordnet sind. Vorzugsweise ist der Messdatenprozessor dann ausgestaltet, den mindestens einen Periodenvergleichswert anhand einer Differenz des ersten und zweiten Wertes der euklidischen Norm zu bestimmen.

Optional kann der Messdatenprozessor ausgestaltet sein, aus Datengruppen benachbarter Pole von mehreren im Phasenwinkel übereinstimmenden Datenpaaren jeweils Differenzen aus deren Werten der euklidischen Norm zu berechnen und den mindestens einen Periodenvergleichswert anhand dieser Differenzen zu bestimmen. Somit kann eine Anfälligkeit gegen vereinzelte Ausreißer in den Messdaten gesenkt werden.

Hierbei kann jede Differenz einen Periodenvergleichswert ergeben. Folglich kann der Messdatenprozessor ausgestaltet sein, mehrere Periodenvergleichswerte zu berechnen. Insbesondere kann der Messdatenprozessor ausgestaltet sein, mindestens zwei Periodenvergleichswerte aus Datenpaaren, deren jeweilige Phasenwinkel einen Abstand von einer halben Periode ($\pi$) aufweisen, zu berechnen. Vorzugweise ist der Messdatenprozessor ausgestaltet, einen ersten Periodenvergleichswert für den Phasenwinkel -0,25$\pi$ und einen zweiten Periodenvergleichswert für den Phasenwinkel 0,75$\pi$ zu berechnen. Dies ist vorteilhaft, da die hierfür benötigten Werte der euklidischen Norm bei den Phasenwinkeln -0,25$\pi$ und 0,75$\pi$ zusätzlich in der Phasenanpassung der POAC verwendet werden können.

Alternativ oder zusätzlich kann der Messdatenprozessor ausgestaltet sein, einen Mittelwert, Effektivwert bzw. Gleichrichtwert der soeben erwähnten Differenzen als Periodenvergleichswert zu berechnen. Der Mittelwert ergibt sich als Quotient aus der Summe der Differenzen, geteilt durch die Anzahl der Differenzen. Der Effektivwert ergibt sich als Quadratwurzel des Quotienten aus der Summe der Quadrate der Differenzen, geteilt durch die Anzahl der Differenzen. Der Gleichrichtwert ergibt sich als Quotient aus der Summe der Beträge der Differenzen, geteilt durch die Anzahl der Differenzen.

Für die Bestimmung der Parameter des Korrektursignals kann der Messdatenprozessor erfindungsgemäß ausgestaltet sein, den jeweiligen Frequenzfaktor, den jeweiligen Amplitudenfaktor sowie die jeweilige Phasenverschiebungskonstante mithilfe von empirischen Gleichungen bzw. Zusammenhängen zu berechnen. Diese empirischen Gleichungen bzw. Zusammenhänge können beispielsweise im Vorfeld experimentell ermittelt werden, indem bei Referenzmessungen das unkorrigierte Positionssignal einem idealen Referenzsignal gegenübergestellt, ein Fehlersignal aus der Differenz des unkorrigierten Positionssignals und des idealen Referenzsignals gebildet und das Frequenzspektrum des Fehlersignals untersucht wird. Die Ermittlung des Frequenzspektrums kann beispielsweise mittels einer diskreten Fourier-Transformation, insbesondere mittels einer schnellen Fourier-Transformation erfolgen. Es kann günstig sein, dass die Ermittlung des Fehlersignals und des daraus ermittelten Frequenzspektrums stückweise, z.B. über zwei benachbarte Pole bzw. über deren zwei Signalperioden, erfolgt um Mittelungseffekte der Fourier-Transformation zu minimieren.

Für Anwendungen des erfindungsgemäßen Messdatenprozessors in Positionsmessgeräten mit AMR-Sensoren werden die nachfolgend beschriebenen empirischen Gleichungen bzw. Zusammenhänge vorgeschlagen:
Es ist vorteilhaft, den jeweiligen Frequenzfaktor im Korrektursignal als ein ungeradzahliges Vielfaches von 0,5 zu wählen. Beispielsweise kann das Korrektursignal eine einzelne periodische Funktion mit dem Frequenzfaktor 0,5 sein. Somit kann gezielt der zweite subharmonische Schwingungsanteil des Fehlersignals durch das Korrektursignal approximiert und aus dem korrigierten Positionssignal herausgerechnet werden.

Alternativ kann das Korrektursignal auch die Summe aus einer ersten periodischen Funktion mit dem Frequenzfaktor 0,5 und einer zweiten periodischen Funktion mit dem Frequenzfaktor 1,5 sein. Somit kann neben dem zweiten subharmonischen Schwingungsanteil des Fehlersignals mindestens noch ein weiterer Schwingungsanteil des Fehlersignals erfasst werden.

Falls der mindestens eine Periodenvergleichswert aus dem oben bereits eingeführten Effektivwert der Differenzen berechnet wurde, kann der Amplitudenfaktor der ersten periodischen Funktion (d.h. periodische Funktion mit dem Frequenzfaktor 0,5) als Produkt des Effektivwerts multipliziert mit der Quadratwurzel aus 3 +/- 0,17 berechnet werden. Der Amplitudenfaktor der zweiten periodischen Funktion (d.h. periodische Funktion mit dem Frequenzfaktor 1,5) kann als Produkt des Effektivwerts multipliziert mit der Quadratwurzel aus 0,125 +/- 0,08 berechnet werden.

Falls der mindestens eine Periodenvergleichswert alternativ aus dem bereits oben eingeführten Gleichrichtwert der Differenzen berechnet wurde, kann der Amplitudenfaktor der ersten periodischen Funktion als Produkt des Gleichrichtwerts multipliziert mit 2,5 +/-0,25 berechnet werden. Der Amplitudenfaktor der zweiten periodischen Funktion kann als Produkt des Gleichrichtwerts multipliziert mit 0,53 +/- 0,1 berechnet werden.

Optional kann der Amplitudenfaktor der zweiten periodischen Funktion auch als Produkt des Amplitudenfaktors der ersten periodischen Funktion multipliziert mit 0,25 abgeschätzt werden.

Falls, wie bereits oben beschrieben, der erste Periodenvergleichswert für den Phasenwinkel - 0,25$\pi$ und der zweite Periodenvergleichswert für den Phasenwinkel 0,75$\pi$ vorliegen, kann die Phasenverschiebungskonstante für die erste periodische Funktion als Summe des Funktionswerts der atan2-Funktion mit dem ersten Periodenvergleichswert und dem zweiten Periodenvergleichswert im Argument, addiert mit 2 +/- 0,4 berechnet werden, sowie für die zweite periodische Funktion als Subtraktion des Funktionswertes der *atan2*-Funktion mit dem ersten Periodenvergleichswert und dem zweiten Periodenvergleichswert im Argument von 2,7 +/- 0,4 berechnet werden.

Die eingangs zugrunde gelegte Aufgabe kann ebenfalls durch ein Positionsmessgerät mit einer magnetischen Maßverkörperung aus aneinandergereihten Polen abwechselnder Polarität, einem Magnetfeldsensor zur Erzeugung von Spursignalen mit Periodendurchläufen beim Passieren der Pole und einem Messdatenprozessor nach einer der obigen Ausgestaltungen gelöst werden.

Insbesondere kann das erfindungsgemäße Positionsmessgerät als ein magnetischer Drehgeber ausgestaltet sein. In diesem Fall kann es sich bei der Maßverkörperung beispielsweise um ein magnetisches Polrad handeln. Alternativ kann das erfindungsgemäße Positionsmessgerät als ein magnetischer Lineargeber ausgestaltet sein und ein Magnetband oder eine Magnetschiene als Maßverkörperung aufweisen. Der Magnetfeldsensor kann ausgestaltet sein, die Spursignale direkt an den Messdatenprozessor zu senden. Optional kann ein Analogdigitalwandler zwischen dem Magnetfeldsensor und dem Messdatenprozessor angeordnet sein.

Das erfindungsgemäße Positionsmessgerät profitiert von den bereits beschriebenen Vorteilen des Messdatenprozessors und zeichnet sich somit durch eine erhöhte Messgenauigkeit aus. Ferner eignet sich das erfindungsgemäße Positionsmessgerät für den Einsatz in einer Regelschleife, beispielsweise eines Drehzahl- oder Geschwindigkeitsreglers, da dank des Messdatenprozessors die für die Berechnung des korrigierten Positionssignals benötigten Größen unabhängig vom Bewegungsablauf des Systems lediglich aus den Messdaten, welche die Spursignale repräsentieren, berechnet werden können. Weiterhin trägt dort das erfindungsgemäße Positionsmessgerät zu einer erhöhten Systemstabilität mit verbesserten Regeleigenschaften bei, da es Störungen reduziert ohne dabei zusätzliche Phasendrehungen den Signalen hinzuzufügen.

Nach einer möglichen Ausgestaltungsform kann der Magnetfeldsensor des Positionsmessgerätes ein AMR-Sensor (d.h. ein nach dem Prinzip des anisotropen magnetoresistiven Effekts funktionierender Sensor) sein. Dank des AMR-Sensors erreicht das erfindungsgemäße Positionsmessgerät eine vergleichsweise hohe Auflösung.

Zusätzlich oder alternativ kann der Magnetfeldsensor eine Sensorlänge aufweisen, die kleiner gleich der Pollänge der Pole der Maßverkörperung ist. Insbesondere kann der Magnetfeldsensor ein sogenannter *fixed-pitch* AMR-Sensor sein, bei dem die Sensorlänge der Pollänge im Wesentlichen gleicht. Alternativ kann der Magnetfeldsensor ein sogenannter *free-pitch* AMR-Sensor sein, bei dem die Sensorlänge kürzer als die Pollänge ist. Bei Drehgebern wird die Sensorlänge tangential zur Richtung der Relativbewegung zwischen Magnetfeldsensor und Maßverkörperung gemessen. Bei Lineargebern wird die Sensorlänge parallel zur Richtung der Relativbewegung zwischen Magnetfeldsensor und Maßverkörperung gemessen.

Durch eine derartige Wahl der Sensorlänge kann im erfindungsgemäßen Positionsmessgerät ein kostengünstiger Magnetfeldsensor mit einer vergleichsweise kleinen Sensorfläche zum Einsatz kommen. Der Messfehler, der sich üblicherweise aufgrund der kleinen Sensorfläche ergibt, wird vorteilhafterweise mithilfe des Messdatenprozessors korrigiert.

Die eingangs zugrunde gelegte Aufgabe kann auch durch ein computerimplementiertes Verfahren gemäß dem unabhängigen Anspruch 11 gelöst werden.

Das Verfahren ist zum Korrigieren eines Messfehlers eines Positionsmessgerätes mit einer magnetischen Maßverkörperung aus aneinandergereihten Polen abwechselnder Polarität und einem Magnetfeldsensor zur Erzeugung von Spursignalen mit Periodendurchläufen beim Passieren der Pole geeignet. Das Verfahren umfasst folgende Schritte:

- Abrufen von Messdaten, die mindestens zwei Periodendurchläufe eines ersten und zweiten Spursignals des relativ zu den Polen der Maßverkörperung bewegten Magnetfeldsensors repräsentieren,

- Berechnen mindestens eines Phasenwinkels des ersten und zweiten Spursignals für jeden der mindestens zwei Periodendurchläufe und mindestens eines den Verlauf des ersten und zweiten Spursignals bei diesem Phasenwinkel charakterisierenden Kennwerts aus den Messdaten,

- Bestimmen mindestens eines Periodenvergleichswertes, der einen periodenübergreifenden Unterschied des Verlaufs des ersten und zweiten Spursignals repräsentiert, anhand eines Vergleichs wenigstens eines Teils der berechneten Kennwerte,

- Bestimmen eines Korrektursignals aus dem mindestens einen Periodenvergleichswert, wobei das Korrektursignal eine periodische Funktion oder eine Superposition periodischer Funktionen mit je einem Amplitudenfaktor, einem Frequenzfaktor und einer Phasenverschiebungskonstante ist, wobei der Amplitudenfaktor und die Phasenverschiebungskonstante jeweils abhängig von dem mindestens einen Periodenvergleichswert sind, und wobei der Frequenzfaktor ein von dem mindestens einen Periodenvergleichswert unabhängiger konstanter Wert ist, und

- Berechnen eines unkorrigierten Positionssignals aus den Messdaten und Berechnen eines korrigierten Positionssignals aus dem unkorrigierten Positionssignal und dem Korrektursignal umfasst.

Mit diesem computerimplementierten Verfahren kann wie beim erfindungsgemäßen Messdatenprozessor die Messgenauigkeit des Positionsmessgerätes erhöht werden, da bei der Berechnung des korrigierten Positionssignals der störende Einfluss der Polvarianz herausgerechnet wird.

Ein Computerprogramm, das Befehle umfasst, die bei der Ausführung des Programms durch einen Computer diesen veranlassen, die Verfahrensschritte des computerimplementierten Verfahrens auszuführen, liefert ebenfalls den zuvor genannten Vorteil und löst deshalb die eingangs zugrunde gelegte Aufgabe. Das erfindungsgemäße Computerprogramm erlaubt es insbesondere, das computerimplementierte Verfahren auf einem Universalrechner, beispielsweise einem handelsüblichen PC, ablaufen zu lassen.

Dies erweitert die Anwendbarkeit der vorliegenden Erfindung. Gleiches gilt für ein computerlesbares Speichermedium, umfassend Befehle, die bei der Ausführung durch den Computer diesen veranlassen, die Verfahrensschritte des computerimplementierten Verfahrens auszuführen. Insbesondere kann auf dem computerlesbaren Speichermedium das erfindungsgemäße Computerprogramm gespeichert sein. Ein solches Speichermedium dient auch der besseren Übertragbarkeit der vorliegenden Erfindung.

Die in Bezug auf den Messdatenprozessor und das Positionsmessgerät beschriebenen Vorteile gelten ebenso für das erfindungsgemäße computerimplementierte Verfahren und umgekehrt.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des erfindungsgemäßen Messdatenprozessors und/oder des erfindungsgemäßen Positionsmessgeräts durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:

Fig. 1:     eine schematische Darstellung eines erfindungsgemäßen Messdatenprozessors gemäß einer beispielhaften Ausführungsform;

Fig. 2:     eine schematische Darstellung eines erfindungsgemäßen Positionsmessgeräts gemäß einer beispielhaften Ausführungsform; und

Fig. 3:     eine weitere schematische Darstellung des erfindungsgemäßen Positionsmessgeräts aus Fig. 2.

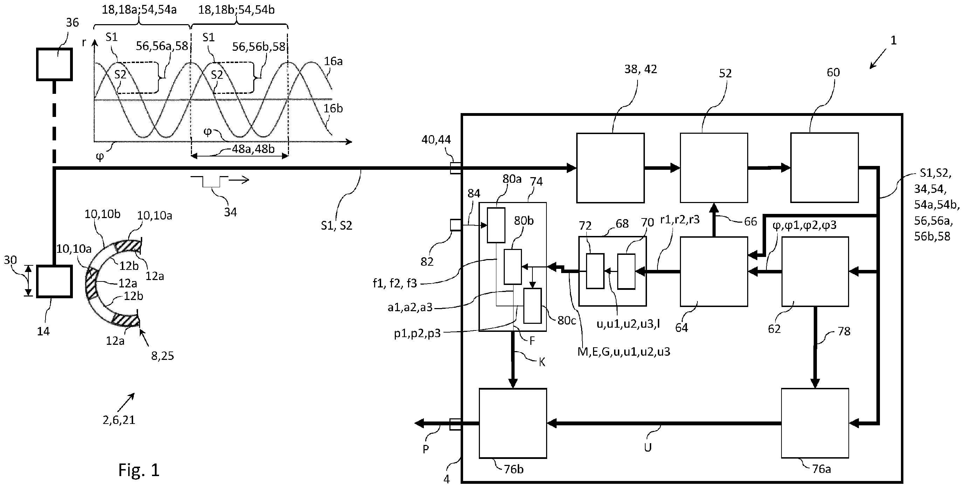

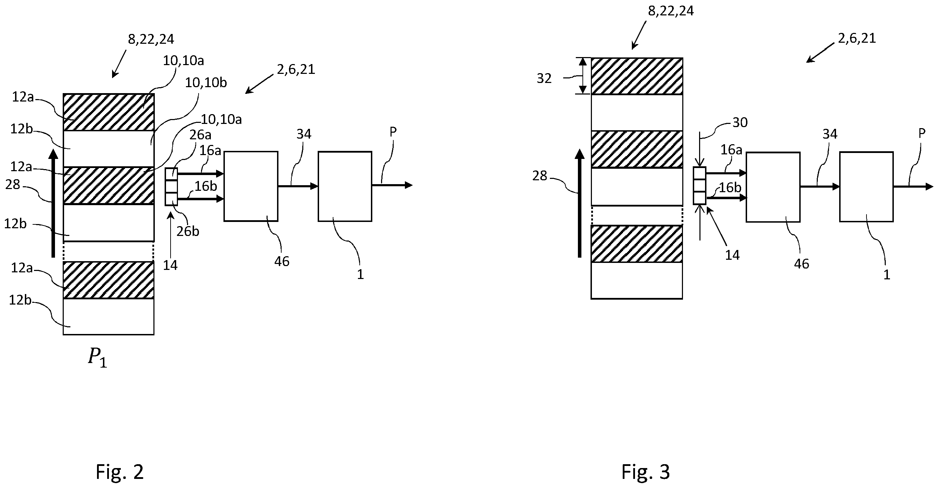

Im Folgenden ist ein erfindungsgemäßer Messdatenprozessor 1 mit Bezug auf Fig. 1 beschrieben. Ferner ist ein erfindungsgemäßes Positionsmessgerät 2 anhand von Fig. 2 und 3 beschrieben.

Obwohl einige Aspekte der Erfindung lediglich im Rahmen einer Vorrichtung beschrieben werden, ist es selbstverständlich möglich, dass diese Aspekte auch eine Beschreibung eines entsprechenden Verfahrens darstellen, wobei z.B. ein Block, ein Modul, eine Einheit oder eine Vorrichtung einem Verfahrensschritt oder einer Funktion eines Verfahrensschritts entspricht. Analog dazu stellen Aspekte, die im Rahmen eines Verfahrensschritts beschrieben werden, auch entsprechend eine Beschreibung eines Blocks, eines Moduls, einer Einheit oder einer Eigenschaft der Vorrichtung dar.

In Fig. 1 ist eine vereinfachte, schematische Darstellung einer beispielhaften Ausführungsform des Messdatenprozessors 1 gezeigt. Der Messdatenprozessor 1 kann eine eigenständige Prozessorplatine 4 aufweisen und/oder auf einer Platine (nicht gezeigt) des Positionsmessgeräts 2 integriert sein. Die nachfolgend beschriebenen Blöcke, Module und Einheiten des Messdatenprozessors 1 können jeweils in Hardware, Software oder in einer Kombination aus beidem implementiert sein.

Der Messdatenprozessor 1 ist für ein Positionsmessgerät 2 vorgesehen. So kann der Messdatenprozessor 1 beispielsweise, aber nicht ausschließlich, in einem magnetischen Positionsmessgerät 6 mit einer magnetischen Maßverkörperung 8 aus aneinandergereihten Polen 10 abwechselnder Polarität 12a, 12b und einem Magnetfeldsensor 14 zur Erzeugung von Spursignalen 16a, 16b mit Periodendurchläufen 18a, 18b beim Passieren der Pole 10 zum Einsatz kommen Magnetfeldsensor 14 und Maßverkörperung 8 sind entsprechend relativ zueinander beweglich ausgestaltet (siehe Fig. 2 und 3).

In Fig. 2 und 3 ist eine vereinfachte, schematische Darstellung einer beispielhaften Ausführungsform des Positionsmessgeräts 2 gezeigt. Das erfindungsgemäße Positionsmessgerät 2 weist die magnetische Maßverkörperung 8, den Magnetfeldsensor 14 und den Messdatenprozessor 1 auf. In der gezeigten Ausführungsform ist das Positionsmessgerät 2 beispielhaft als ein magnetischer Lineargeber 20 ausgestaltet. In diesem Fall kann es sich bei der Maßverkörperung 8 um ein Magnetband 22 oder eine Magnetschiene 24 handeln. Gemäß einer alternativen Ausführungsform kann das Positionsmessgerät 2 auch als ein magnetischer Drehgeber 21 ausgestaltet sein und ein magnetisches Polrad 25 als Maßverkörperung 8 aufweisen (siehe Fig. 1).

Der Magnetfeldsensor 14 kann ein AMR-Sensor sein und zwei nach dem Prinzip des anisotropen magnetoresistiven Effekts funktionierende Abtastköpfe 26a, 26b enthalten. In der gezeigten Ausführungsform aus Fig. 2 und 3 weist der Magnetfeldsensor 14 eine parallel zur Richtung 28 der Relativbewegung gemessene Sensorlänge 30 auf, die gleich der Pollänge 32 der Pole 10 der Maßverkörperung 8 ist. Alternativ kann die Sensorlänge 30 ungleich der Pollänge sein, insbesondere kann die Sensorlänge 30 auch kleiner als die Pollänge 32 sein.

Der Messdatenprozessor 1 ist ausgestaltet, Messdaten 34, die für mindestens zwei Periodendurchläufe 18a, 18b eines ersten Spursignalsignals 16a und für mindestens zwei Periodendurchläufe 18a, 18b eines zweiten Spursignals 16b repräsentativ sind, abzurufen. Insbesondere kann der Messdatenprozessor 1 ausgestaltet sein, die Messdaten 34 direkt vom Magnetfeldsensor 14 zu empfangen und/oder aus einem Messdatenspeicher 36 auszulesen. Dies ist in Fig. 1 jeweils links mittig bzw. links oben angedeutet. Für das Empfangen der Messdaten 34 kann der Messdatenprozessor 1 eine entsprechende Empfangseinheit 38 und eine Empfangsschnittstelle 40 aufweisen. Entsprechend kann der Messdatenprozessor 1 für das Auslesen der Messdaten 34 eine Ausleseeinheit 42 und eine Ausleseschnittstelle 44 aufweisen.

Die Spursignale 16a, 16b können in analoger und/oder digitaler Form vorliegen, je nachdem ob der Magnetfeldsensor 14 analoge Spursignale und/oder digitale Spursignale ausgibt. Der Magnetfeldsensor 14 kann ferner ausgestaltet sein, die Spursignale 16a, 16b direkt an den Messdatenprozessor 1 zu senden. Optional kann ein Analogdigitalwandler 46 zwischen dem Magnetfeldsensor 14 und dem Messdatenprozessor 1 angeordnet sein (siehe Fig. 2 und 3).

Die Spursignale 16a, 16b entstehen, indem der Magnetfeldsensor 14, insbesondere die zwei Abtastköpfe 26a, 26b, mit einer zeitlich konstanten oder veränderlichen Polfrequenz relativ zu den Polen 10 der Maßverkörperung 8 bewegt werden oder sich die Pole 10 daran vorbei bewegen. Das erste Spursignal 16a stellt hierbei die vom Abtastkopf 26a verzeichneten Änderungen des lokalen Magnetfelds am Magnetfeldsensor 14 dar. Das zweite Spursignal 16b stellt entsprechend den vom Abtastkopf 26b verzeichneten Verlauf des lokalen Magnetfelds am Magnetfeldsensor 14 dar. Falls benachbarte Pole 10a, 10b der Maßverkörperung 8 nicht exakt komplementär zueinander ausgebildet sind, z.B. wegen externer Magnetfelder und/oder herstellungsbedingter Pollängenunterschiede, liegt eine Polvarianz vor. Diese Polvarianz beeinträchtigt die Messgenauigkeit des Positionsmessgeräts 2 und wird erfindungsgemäß mittels des Messdatenprozessors 1 wie nachfolgend beschrieben kompensiert.

In Fig. 1 ist beispielhaft erkennbar, dass das erste Spursignal 16a im Wesentlichen sinusförmig und das zweite Spursignal 16b im Wesentlichen kosinusförmig ist, wobei die Spursignale 16a, 16b im Wesentlichen die gleiche Spursignalfrequenz aufweisen. Mit anderen Worten stimmt die Periodenlänge 48a des ersten Spursignals 16a mit der Periodenlänge 48b des zweiten Spursignals 16b überein. Ferner stimmt bei der vorliegenden Ausführungsform die Spursignalfrequenz mit der Polfrequenz überein. Das heißt, jeder am Magnetfeldsensor 14 passierende Pol 10 der Maßverkörperung 8 erzeugt in den Spursignalen 16a, 16b jeweils einen Periodendurchlauf 18.

Um die Spursignale 16a, 16b möglichst gut aneinander anzupassen, ist der Messdatenprozessor 1 vorzugsweise ausgestaltet, eine Phasen-, Offset- und/oder Amplitudenanpassung der Spursignale 16a, 16b durchzuführen. Dies kann z.B. über eine Phasen-, Offset- und Amplitudenregelung (kurz *POAC*) erfolgen. Entsprechend kann der Messdatenprozessor 1 einen POAC-Block 52 aufweisen.

Zur Aufbereitung der Messdaten 34 kann der Messdatenprozessor 1 ferner ausgestaltet sein, die Messdaten 34 im Datengruppen 54 aufzuteilen, wobei jede Datengruppe 54 mehrere Datenpaare 56, die jeweils ein Signalwertepaar 58 der Spursignale 16a, 16b repräsentieren, umfasst, und wobei die Datenpaare 56 einer Datengruppe 54 jeweils zum selben Periodendurchlauf 18 gehören. Hierfür kann der Messdatenprozessor 1 einen Datenaufbereitungsblock 60 aufweisen. Außerdem kann der Messdatenprozessor 1 ausgestaltet sein, im Datenaufbereitungsblock 60 die Datengruppen 54 einzelnen Polen 10 der Maßverkörperung 8 zuzuordnen. Diese Zuordnung ist vor allem aufgrund der bereits erwähnten Übereinstimmung von Spursignalfrequenz und Polfrequenz möglich.

Der Messdatenprozessor 1 ist ferner ausgestaltet, aus den Messdaten für jeden der mindestens zwei Periodendurchläufe 18a, 18b mindestens einen Phasenwinkel $\varphi$ der Spursignale 16a, 16b und einen den Verlauf der Spursignale 16a, 16b bei diesem Phasenwinkel $\varphi$ charakterisierenden Kennwert $r$ zu berechnen. Hierfür weist der Messdatenprozessor 1 eine Phasenwinkelberechnungseinheit 62 und eine Kennwertberechnungseinheit 64 auf.

Vorzugsweise kann der jeweilige Phasenwinkel $\varphi$ innerhalb des Periodendurchlaufs einen Zahlenwert zwischen 0 und $2\pi$ bzw. zwischen $-\pi$ und $\pi$ in Bogenmaß annehmen. In der gezeigten Ausführungsform lässt sich der jeweilige Phasenwinkel $\varphi$ beispielsweise über die *atan*2-Funktion aus einem der Datenpaare 56, d.h. aus einem Signalwert $S1$ des ersten Spursignals 16a und einem Signalwert S2 des zweiten Spursignals 16b berechnen:

$$\varphi(S_1, S_2) = atan2(S_2, S_1)$$

Somit ist der Messdatenprozessor 1 auch ausgestaltet, jedem Datenpaar 56 bzw. jedem Signalwert *S1* und

*S2* seinen Phasenwinkel $\varphi$ zuzuordnen.

$$S_1 =: S_1(\varphi)$$

$$S_2 =: S_2(\varphi)$$

Der Kennwert *r* kann jeweils aus den Signalwerten *S1* und *S2*, beispielsweise mittels der euklidischen Norm wie folgt berechnet und dem aus den gleichen Signalwerten *S1* und *S2* berechneten Phasenwinkel $\varphi$ zugeordnet werden:

$$r(S_1, S_2) = \sqrt{S_1{}^2 + S_2{}^2} =: r(\varphi(S_1, S_2))$$

Auf diese Weise kann z.B. mindestens ein Kennwert *r1* für den Periodendurchlauf 18a und mindestens ein Kennwert *r2* für den Periodendurchlauf 18b berechnet werden. Bevorzugt ist der Messdatenprozessor 1 ausgestaltet, den Kennwert *r1* aus einem ersten Datenpaar 56a einer ersten Datengruppe 54a und den Kennwert *r2* aus einem zweiten Datenpaar 56b einer zweiten Datengruppe 54b zu berechnen, wobei das erste und zweite Datenpaar 56a, 56b im Phasenwinkel übereinstimmen oder zumindest annähernd übereinstimmen, und wobei die erste und zweite Datengruppe 54a, 54b benachbarten Polen 10a, 10b zugeordnet sind. Mit anderen Worten ist der Messdatenprozessor 1 ausgestaltet, aus Datengruppen 54a, 54b benachbarter Pole 10a, 10b zwei Kennwerte *r1, r2* aus zwei Datenpaaren, denen im Datenaufbereitungsblock 60 der gleiche oder annähernd der gleiche Phasenwinkel $\varphi$ zugeordnet wurde, zu berechnen:

$$r_1(\varphi) := r\big(S_1(\varphi), S_2(\varphi)\big)$$

$$r_2(\varphi) := r(S_1(\varphi + 2\pi), S_2(\varphi + 2\pi))$$

Das Argument $\varphi + 2\pi$ soll hierbei zum Ausdruck bringen, dass es sich um den gleichen Phasenwinkel $\varphi$ handelt, die jeweiligen Signalwerte *S1, S2* jedoch zur Datengruppe des benachbarten Pols gehören.
Optional ist der Messdatenprozessor 1 ausgestaltet, für die Phasen-, Offset- und/oder Amplitudenanpassung im *POAC*-Block 52 Werte der euklidischen Norm der Spursignale 16a, 16b in Abhängigkeit des Phasenwinkels $\varphi$ aus der Kennwertberechnungseinheit 64 vollständig oder zumindest teilweise abzurufen und für die Phasen-, Offset- und/oder Amplitudenanpassung zu verwenden. Dies ist in Fig. 1 mit dem Pfeil 66 angedeutet.
Der Messdatenprozessor 1 ist außerdem ausgestaltet, anhand eines Vergleichs wenigstens eines Teils der berechneten Kennwerte *r* mindestens einen Periodenvergleichswert *u*, der einen periodenübergreifenden Unterschied des Verlaufs der Spursignale 16a, 16b repräsentiert, zu bestimmen. Über den mindestens einen Periodenvergleichswert *u* kann das Ausmaß bzw. der Ausprägungsgrad der oben bereits erwähnten Polvarianz abgeschätzt werden.
Hierfür weist der Messdatenprozessor 1 einen Periodenvergleichsblock 68 auf. Beispielsweise ist der Messdatenprozessor 1 ausgestaltet, den mindestens einen Periodenvergleichswert *u* anhand einer Differenz der Kennwerte *r1, r2* in einem Subtraktionsmodul 70 zu berechnen.

$$u(\varphi) = r_1(\varphi) - r_2(\varphi)$$

Optional kann der Messdatenprozessor 1 ausgestaltet sein, aus den Datengruppen 54a, 54b benachbarter Pole 10a, 10b mehrere derartige Differenzen für unterschiedliche Phasenwinkel $\varphi1, \varphi2, \varphi3...$ zu berechnen. Vom Periodenvergleichsblock 68 kann dann je ein Periodenvergleichswert *u1, u2, u3, ...* ausgegeben werden:

$$u_i(\varphi_i) = r_1(\varphi_i) - r_2(\varphi_i) \quad \text{mit } i = 1,2,3 \ldots$$

Insbesondere kann der Messdatenprozessor 1 zusätzlich ausgestaltet sein, mindestens zwei Periodenvergleichswerte *u1, u2* bei Phasenwinkeln $\varphi1, \varphi2$, die einen Abstand von einer halben Periode ($\pi$) aufweisen, zu berechnen.

$$u_1(\varphi_1) = r_1(\varphi_1) - r_2(\varphi_1)$$

$$u_2(\varphi_2) = r_1(\varphi_2) - r_2(\varphi_2) \quad \text{mit } |\varphi_2 - \varphi_1| = \pi$$

Vorzugsweise ist der Messdatenprozessor ausgestaltet, einen ersten Periodenvergleichswert $u1$ für den Phasenwinkel -0,25$\pi$ und einen zweiten Periodenvergleichswert $u2$ für den Phasenwinkel 0,75$\pi$ zu berechnen.

$$u_1\left(\varphi = -\frac{\pi}{4}\right) = r_1\left(-\frac{\pi}{4}\right) - r_2\left(-\frac{\pi}{4}\right)$$

$$u_2\left(\varphi = \frac{3\pi}{4}\right) = r_1\left(\frac{3\pi}{4}\right) - r_2\left(\frac{3\pi}{4}\right)$$

Dies ist besonders dann vorteilhaft, wenn die Kennwerte $r1$, $r2$ bei den Phasenwinkeln - 0,25$\pi$ und 0,75$\pi$ jeweils auch für die Phasenanpassung im *POAC*-Block 52 verwendet werden.

Alternativ oder zusätzlich kann der Messdatenprozessor 1 ausgestaltet sein, die Periodenvergleichswerte $u$ über deren Anzahl $l$ zu mitteln. Hierfür kann der Periodenvergleichsblock 68 ein Mittelungsmodul 72 aufweisen, das ausgestaltet ist, einen Mittelwert $M$, einen Effektivwert $E$ bzw. einen Gleichrichtwert $G$ zu berechnen.

$$M(u_i) = \frac{1}{l}\sum_{i=1}^{l} u_i(\varphi_i)$$

$$E(u_i) = \sqrt{\frac{1}{l}\sum_{i=1}^{l} u_i(\varphi_i)^2}$$

$$G(u_i) = \frac{1}{l}\sum_{i=1}^{l} |u_i(\varphi_i)|$$

Sobald eine Abschätzung des Ausmaßes der oben bereits erwähnten Polvarianz in Form des mindestens einem Periodenvergleichswertes $u$ vorliegt, kann ein störender Einfluss dieser Polvarianz mit einem Korrektursignal $K$ approximiert werden. Hierfür kann der Messdatenprozessor 1 einen Korrekturblock 74 aufweisen, der ausgestaltet ist, aus dem mindestens einem Periodenvergleichswert $u$ das Korrektursignal $K$ zu bestimmen, wobei das Korrektursignal $K$ eine vom Phasenwinkel $\varphi$ abhängige periodische Funktion $F$ mit einem Amplitudenfaktor a, einem Frequenzfaktor $f$ und einer Phasenverschiebungskonstante $p$ ist. Zum Beispiel:

$$K = F(\varphi) = a(u) \cdot \cos\bigl(f \cdot \varphi + p(u)\bigr)$$

Wie aus der obigen Gleichung zu erkennen ist, sind der Amplitudenfaktor a und die Phasenverschiebungskonstante $p$ jeweils von dem mindestens einen Periodenvergleichswert $u$ abhängige Parameter. Der Frequenzfaktor $f$ ist hingegen ein konstanter Parameter. Auf die konkrete Ermittlung der Parameter wird weiter unten eingegangen.

Alternativ kann das Korrektursignal $K$ auch durch eine Superposition periodischer Funktionen $F$ gebildet werden:

$$K = \sum_{j=1}^{n} F_j(\varphi) = a_j(u) \cdot \cos\bigl(f_j \cdot \varphi + p_j(u)\bigr)$$

Der Messdatenprozessor 1 ist ferner ausgestaltet, aus den Messdaten 34 in einer ersten Positionsberechnungseinheit 76a ein unkorrigiertes Positionssignal U zu berechnen. Vorzugsweise kann der Messdatenprozessor 1 ausgestaltet sein, bei der Berechnung des unkorrigierten Positionssignals U etwaige bereits berechnete Phasenwinkel $\varphi$ mit einzubeziehen. Dies ist in Fig. 1 durch den Pfeil 78 angedeutet.

Bei digitalen Spursignalen kann der Messdatenprozessor 1 ausgestaltet sein, eine Mehrzahl von unkorrigierten Positionsmesswerten zu berechnen und das unkorrigierte Positionssignal U aus den unkorrigierten Positionsmesswerten zu bilden. Insbesondere, kann der Messdatenprozessor 1 ausgestaltet sein, die Anzahl der vollständigen Periodendurchläufe 18 zu ermitteln und daraus einen groben Positionsmesswert zu bestimmen. Ferner kann der Messdatenprozessor 1 ausgestaltet sein, anhand des zuletzt berechneten Phasenwinkels $\varphi$ einen feinen Positionsmesswert zu bestimmen. Der unkorrigierte Positionsmesswert ergibt sich dann aus einer Linearkombination, insbesondere Summe, von grobem Positionsmesswert und feinem Positionsmesswert.

Bei analogen Spursignalen kann der Messdatenprozessor 1 ausgestaltet sein, zumindest das unkorrigierte Positionssignal U ebenfalls analog zu berechnen.

Ferner ist der Messdatenprozessor 1 ausgestaltet, aus dem unkorrigierten Positionssignal U und dem Korrektursignal K in einer zweiten Positionsberechnungseinheit 76b ein korrigiertes Positionssignal P zu berechnen. Insbesondere kann der Messdatenprozessor 1 ausgestaltet sein, das korrigierte Positionssignal P durch Subtraktion des Korrektursignals K vom unkorrigierten Positionssignal U zu berechnen.

$$P = U - K$$

Im korrigierten Positionssignal P ist der störende Einfluss der oben bereits erwähnten Polvarianz durch das Herausrechnen des Korrektursignals K minimiert. Folglich liefert das Positionsmessgerät 2 genauere Ergebnisse in Form des korrigierten Positionssignals P.

Aufgrund der Zuordenbarkeit zwischen den Datengruppen 54 und den Polen 10 der Maßverkörperung 8 können die Messdaten 34 für beide Polaritäten 12a, 12b (d.h. Nord- und Südpol) getrennt gemittelt und anhand dieser Mittelwerte das Korrektursignal K berechnet werden. Alternativ kann das Korrektursignal K auch nur jeweils für einen Nord- und einen Südpol repräsentativ berechnet und dann entsprechend auf alle anderen Nord- und Südpole getrennt angewandt werden. Selbstverständlich kann das Korrektursignal K auch für alle Nord- und Südpole einzeln berechnet und einzeln angewandt werden.

Für die Ermittlung der konkreten Parameter im Korrektursignal K kann der Korrekturblock 74 je ein auf empirischen Gleichungen bzw. Zusammenhängen basierendes Parametrisierungsmodul 80a, 80b, 80c aufweisen. Die darin genutzten empirischen Gleichungen bzw. Zusammenhänge können beispielsweise im Vorfeld experimentell ermittelt werden, indem bei Referenzmessungen das unkorrigierte Positionssignal U einem idealen Referenzsignal gegenübergestellt, ein Fehlersignal aus der Differenz des unkorrigierten Positionssignales U und des idealen Referenzsignals gebildet und das Frequenzspektrum des Fehlersignals untersucht wird. Die Ermittlung des Frequenzspektrums kann beispielsweise mittels einer diskreten Fourier-Transformation, insbesondere mittels einer schnellen Fourier-Transformation und ferner auch stückweise erfolgen.

Erfahrungsgemäß lässt sich der störende Einfluss der Polvarianz mit dem Korrektursignal K gut approximieren, wenn der jeweilige Frequenzfaktor f in Abhängigkeit vom Typ des Magnetfeldsensors 14 gewählt wird. Zum Eingeben oder Auslesen des Typs des verwendeten Magnetfeldsensors 14 kann der Messdatenprozessor 1 eine Schnittstelle 82 aufweisen, über die das entsprechende Parametrisierungsmodul 80a die Typeninformationen 84 erhält.

Für AMR-Sensoren wird hierbei vorgeschlagen, den Frequenzfaktor f als ein ungeradzahliges Vielfaches von 0,5 zu wählen:

$$f_j = \frac{2j-1}{2}$$

In den oben bereits aufgeführten Gleichungen des Korrektursignals K gilt dann beispielsweise:

$$f = f_1 = \frac{1}{2}$$

$$f_2 = \frac{3}{2}$$

Häufig ist es ausreichend, eine Superposition aus den ersten zwei ungeraden periodischen Funktionen F zu bilden:

$$K = a_1(u) \cdot \cos(f_1 \cdot \varphi + p_1(u)) + a_2(u) \cdot \cos(f_2 \cdot \varphi + p_2(u))$$

Die bereits erwähnten Referenzmessungen zeigen, dass sich der störende Einfluss der Polvarianz gut mit dem Korrektursignal $K$ approximieren lässt, wenn der jeweilige Amplitudenfaktor a im Parametrisierungsmodul 80b proportional zum mindestens einen Periodenvergleichswert $u$ berechnet wird. Falls der oben bereits eingeführte Effektivwert $E$ vorliegt, können bei AMR-Sensoren die folgenden Zusammenhänge in den Gleichungen des Korrektursignals $K$ eingesetzt werden:

$$a = a_1 = \sqrt{3}\, E(u_i)$$

$$a_2 = \frac{1}{4}\sqrt{2}\, E(u_i)$$

Falls stattdessen der oben bereits eingeführte Gleichrichtwert $G$ vorliegt, werden bei AMR-Sensoren die folgenden Zusammenhänge für die Gleichungen des Korrektursignals $K$ vorgeschlagen:

$$a = a_1 = 2{,}5 \cdot G(u_i)$$

$$a_2 = 0{,}53 \cdot G(u_i)$$

Vereinfachend kann auch der folgende Zusammenhang verwendet werden:

$$a_2 = \frac{1}{4} a_1$$

Wenn die jeweilige Phasenverschiebungskonstante $p$ im Parametrisierungsmodul 80c aus einer inversen Winkelfunktion des mindestens einen Periodenvergleichswerts $u$ berechnet wird, approximiert das Korrektursignal $K$ den störenden Einfluss der Polvarianz gut.

Falls der bereits beschriebene erste Periodenvergleichswert $u1$ für den Phasenwinkel - $0{,}25\pi$ und der zweite Periodenvergleichswert $u2$ für den Phasenwinkel $0{,}75\pi$ vorliegen, kann bei AMR-Sensoren beispielsweise der folgende Zusammenhang jeweils in den Gleichungen des Korrektursignals $K$ eingesetzt werden:

$$p_1 = \mathrm{atan2}\left(u_2\left(\frac{3\pi}{4}\right), u_1\left(-\frac{\pi}{4}\right)\right) + 2$$

$$p_2 = 2{,}7 - \mathrm{atan2}\left(u_2\left(\frac{3\pi}{4}\right), u_1\left(-\frac{\pi}{4}\right)\right)$$

**Patentansprüche**

1. Messdatenprozessor (1), für ein Positionsmessgerät (2) mit einer magnetischen Maßverkörperung (8) aus aneinandergereihten Polen (10, 10a, 10b) abwechselnder Polarität (12a, 12b) und einem Magnetfeldsensor (14) zur Erzeugung von Spursignalen (16a, 16b) mit Periodendurchläufen (18, 18a, 18b) beim Passieren der Pole (10, 10a, 10b), wobei der Messdatenprozessor (1) ausgestaltet ist,

   - Messdaten (34), die für mindestens zwei Periodendurchläufe (18a, 18b) eines ersten und zweiten Spursignals (16a, 16b) des mit einer Polfrequenz relativ zu den Polen (10, 10a, 10b) bewegten Magnetfeldsensors (14) repräsentativ sind, abzurufen,
   - aus den Messdaten (34) für jeden der mindestens zwei Periodendurchläufe (18a, 18b) mindestens einen Phasenwinkel ($\varphi$) des ersten und zweiten Spursignals (16a, 16b) und mindestens einen den Verlauf des ersten und zweiten Spursignals (16a, 16b) bei diesem Phasenwinkel ($\varphi$) charakterisierenden Kennwert ($r$) zu berechnen,

- anhand eines Vergleichs wenigstens eines Teils der berechneten Kennwerte ($r$) mindestens einen Periodenvergleichswert ($u$), der einen periodenübergreifenden Unterschied des Verlaufs des ersten und zweiten Spursignals (16a, 16b) repräsentiert, zu bestimmen,
- aus dem mindestens einen Periodenvergleichswert ($u$) ein Korrektursignal ($K$) zu bestimmen, wobei das Korrektursignal ($K$) eine periodische Funktion ($F$) oder eine Superposition periodischer Funktionen ($F$) mit je einem Amplitudenfaktor ($a$), einem Frequenzfaktor ($f$) und einer Phasenverschiebungskonstante ($p$) ist, wobei der Amplitudenfaktor ($a$) und die Phasenverschiebungskonstante ($p$) jeweils abhängig von dem mindestens einen Periodenvergleichswert ($u$) sind, und wobei der Frequenzfaktor ($f$) ein von dem mindestens einen Periodenvergleichswert ($u$) unabhängiger konstanter Wert ist,
- aus den Messdaten (34) ein unkorrigiertes Positionssignal ($U$) zu berechnen, und
- aus dem unkorrigierten Positionssignal ($U$) und dem Korrektursignal ($K$) ein korrigiertes Positionssignal ($P$) zu berechnen.

2. Messdatenprozessor nach Anspruch 1, wobei der Messdatenprozessor (1) ausgestaltet ist, das korrigierte Positionssignal ($P$) durch Subtraktion des Korrektursignals ($K$) vom unkorrigierten Positionssignal ($U$) zu berechnen.

3. Messdatenprozessor nach Anspruch 1 oder 2, wobei das erste Spursignal (16a) im Wesentlichen sinusförmig ist, wobei das zweite Spursignal (16b) im Wesentlichen kosinusförmig ist, und/oder wobei eine Spursignalfrequenz des ersten und zweiten Spursignals (16a, 16b) der Polfrequenz entspricht.

4. Messdatenprozessor nach einem der Ansprüche 1 bis 3, wobei im Korrektursignal ($K$) der jeweilige Amplitudenfaktor ($a$) proportional zum mindestens einen Periodenvergleichswert ($u$) ist und/oder die jeweilige Phasenverschiebungskonstante ($p$) eine inverse Winkelfunktion des mindestens einen Periodenvergleichswerts ($u$) ist und/oder der jeweilige Frequenzfaktor ($f$) ein ungeradzahliges Vielfaches von 0,5 ist.

5. Messdatenprozessor nach einem der Ansprüche 1 bis 4, wobei der Messdatenprozessor (1) ausgestaltet ist Werte der euklidischen Norm des ersten und zweiten Spursignals (16a, 16b) in Abhängigkeit des Phasenwinkels ($\varphi$) aus den Messdaten (34) und die Kennwerte (r) zu berechnen.

6. Messdatenprozessor nach Anspruch 5, wobei der Messdatenprozessor (1) ausgestaltet ist,

- die Messdaten (34) in Datengruppen (54, 54a, 54b) aufzuteilen, wobei jede Datengruppe (54, 54a, 54b) mehrere Datenpaare (56, 56a, 56b), die jeweils ein Signalwertepaar (58) des ersten und zweiten Spursignals (16a, 16b) repräsentieren, umfasst, und wobei die Datenpaare (56, 56a, 56b) einer Datengruppe (54, 54a, 54b) jeweils zum selben Periodendurchlauf (18, 18a, 18b) gehören,
- jedem Datenpaar (56, 56a, 56b) einen Phasenwinkel ($\varphi$) innerhalb des Periodendurchlaufs (18, 18a, 18b) zuzuordnen,
- die Datengruppen (54, 54a, 54b) einzelnen Polen (10, 10a, 10b) der Maßverkörperung (8) zuzuordnen,
- einen ersten Wert der euklidischen Norm des ersten und zweiten Spursignals (16a, 16b) aus einem ersten Datenpaar (56a) einer ersten Datengruppe (54a) zu berechnen,
- einen zweiten Wert der euklidischen Norm aus einem zweiten Datenpaar (56b) einer zweiten Datengruppe (54b) zu berechnen, wobei das erste und zweite Datenpaar (56b, 56b) im Phasenwinkel ($\varphi$) übereinstimmen, und wobei die erste und zweite Datengruppe (54a, 54b) benachbarten Polen (10a, 10b) zugeordnet sind, und
- den mindestens einen Periodenvergleichswert ($u$) anhand einer Differenz des ersten und zweiten Wertes der euklidischen Norm zu bestimmen.

7. Messdatenprozessor nach Anspruch 6, wobei der Messdatenprozessor (1) ausgestaltet ist, aus Datengruppen (54a, 54b) benachbarter Pole (10a, 10b) von mehreren im Phasenwinkel ($\varphi$) übereinstimmenden Datenpaaren (56a, 56b) jeweils Differenzen aus deren Werten der euklidischen Norm des ersten und zweiten Spursignals (16a, 16b) zu berechnen und den mindestens einen Periodenvergleichswert ($u$) anhand dieser Differenzen zu bestimmen.

8. Messdatenprozessor nach einem der Ansprüche 5 bis 7, wobei der Messdatenprozessor (1) ausgestaltet ist, eine Phasen-, Offset- und/oder Amplitudenanpassung des ersten und zweiten Spursignals (16a, 16b) durchzuführen und hierfür Werte der euklidischen Norm des ersten und zweiten Spursignals (16a, 16b) zu verwenden.

9. Positionsmessgerät (2) mit einer magnetischen Maßverkörperung (8) aus aneinandergereihten Polen (10, 10a, 10b) abwechselnder Polarität (12a, 12b), einem Magnetfeldsensor (14) zur Erzeugung von Spursignalen (16a, 16b) mit Periodendurchläufen (18, 18a, 18b) beim Passieren der Pole (10, 10a, 10b) und einem Messdatenprozessor (1) nach einem der Ansprüche 1 bis 8.

10. Positionsmessgerät nach Anspruch 9, wobei der Magnetfeldsensor (14) ein AMR-Sensor ist und/oder der Magnetfeldsensor (14) eine Sensorlänge (30) aufweist, die kleiner oder gleich der Pollänge (32) der Pole (10, 10a, 10b) der Maßverkörperung (8) ist.

11. Computerimplementiertes Verfahren zum Korrigieren eines Messfehlers eines Positionsmessgerätes (2) mit einer magnetischen Maßverkörperung (8) aus aneinandergereihten Polen (10, 10a, 10b) abwechselnder Polarität (12a, 12b) und einem Magnetfeldsensor (14) zur Erzeugung von Spursignalen (16a, 16b) mit Periodendurchläufen (18, 18a, 18b) beim Passieren der Pole (10, 10a, 10b), wobei das Verfahren die Schritte

- Abrufen von Messdaten (34), die mindestens zwei Periodendurchläufe (18a, 18b) eines ersten und zweiten Spursignals (16a, 16b) des relativ zu den Polen (10, 10a, 10b) der Maßverkörperung (8) bewegten Magnetfeldsensors (14) repräsentieren,
- Berechnen mindestens eines Phasenwinkels ($\varphi$) des ersten und zweiten Spursignals (16a, 16b) für jeden der mindestens zwei Periodendurchläufe (18a, 18b) und mindestens eines den Verlauf des ersten und zweiten Spursignals (16a, 16b) bei diesem Phasenwinkel ($\varphi$) charakterisierenden Kennwerts ($r$) aus den Messdaten (34),
- Bestimmen mindestens eines Periodenvergleichswertes ($u$), der einen periodenübergreifenden Unterschied des Verlaufs des ersten und zweiten Spursignals (16a, 16b) repräsentiert, anhand eines Vergleichs wenigstens eines Teils der berechneten Kennwerte ($r$),
- Bestimmen eines Korrektursignals ($K$) aus dem mindestens einen Periodenvergleichswert ($u$), wobei das Korrektursignal ($K$) eine periodische Funktion ($F$) oder eine Superposition periodischer Funktionen ($F$) mit je einem Amplitudenfaktor ($a$), einem Frequenzfaktor ($f$) und einer Phasenverschiebungskonstante ($p$) ist, wobei der Amplitudenfaktor ($a$) und die Phasenverschiebungskonstante ($p$) jeweils abhängig von dem mindestens einen Periodenvergleichswert ($u$) sind, und wobei der Frequenzfaktor ($f$) ein von dem mindestens einen Periodenvergleichswert ($u$) unabhängiger konstanter Wert ist,
- Berechnen eines unkorrigierten Positionssignals ($U$) aus den Messdaten (34) und
- Berechnen eines korrigierten Positionssignals ($P$) aus dem unkorrigierten Positionssignal ($U$) und dem Korrektursignal ($K$) umfasst.

**Claims**

1. Data processor (1) for a position measuring device (2) comprising a magnetic dimensional scale (8) consisting of consecutive poles (10, 10a, 10b) with alternating polarity (12a, 12b) and a magnetic field sensor (14) generating trace signals (16a, 16b) with period cycles (18, 18a, 18b) when passing the poles (10, 10a, 10b), wherein the data processor (1) is configured to

- retrieve measurement data (34) representing at least two period cycles (18a, 18b) of first and second trace signals (16a, 16b) from the magnetic field sensor (14), wherein the sensor (14) moves at a pole frequency relative to the poles (10, 10a, 10b),
- calculate, using the measurement data (34) for each of the minimum two period cycles (18a, 18b), at least one phase angle ($\varphi$) of the first and second trace signals (16a, 16b) and at least one characteristic parameter ($r$) that characterizes the behavior of these trace signals (16a, 16b) at this phase angle ($\varphi$),
- identify, by comparing a section of the calculated characteristic parameters ($r$), at least one period comparison value ($u$) that represents a cross-period difference in the behavior of the first and second trace signals (16a, 16b),
- determine a correction signal ($K$) from at least one period comparison value ($u$), wherein the correction signal ($K$) is a periodic function ($F$) or a superposition of periodic functions ($F$), each with an amplitude factor ($a$), a frequency factor ($f$), and a phase shift constant ($p$), wherein the amplitude factor ($a$) and the phase shift constant ($p$) are dependent on at least one period comparison value ($u$), while the frequency factor ($f$) remains constant and independent of at least one period comparison value ($u$),
- calculate an uncorrected position signal (I) using the measurement data (34), and
- calculate a corrected position signal ($P$) from the uncorrected position signal ($U$) and the correction signal ($K$).

2. Data processor (1) according to Claim 1, wherein the data processor (1) is configured to calculate the corrected position signal ($P$) by subtracting the correction signal ($K$) from the uncorrected position signal ($U$).

3. Data processor (1) according to Claim 1 or 2, wherein the first trace signal (16a) is substantially sinusoidal, the second trace signal (16b) is substantially cosine-shaped, and/or the trace signal frequency of the first and second trace signals (16a, 16b) corresponds to the pole frequency.

4. Data processor (1) according to any one of Claims 1 to 3, wherein in the correction signal ($K$), the respective amplitude factor ($a$) is proportional to at least one period comparison value ($u$), and/or the respective phase shift constant ($p$) is an inverse angular function of at least one period comparison value ($u$), and/or the respective frequency factor ($f$) is an odd multiple of 0.5.

5. Data processor (1) according to any one of Claims 1 to 4, wherein the data processor (1) is configured to calculate values of the Euclidean norm of the first and second trace signals (16a, 16b) depending on the phase angle ($\varphi$) from the measurement data (34) and the characteristic parameters ($r$).

6. Data processor (1) according to Claim 5, wherein the data processor (1) is configured to:

- divide the measurement data (34) into data groups (54, 54a, 54b), each data group (54, 54a, 54b) comprising multiple data pairs (56, 56a, 56b), each representing a pair of signal values (58) of the first and second trace signals (16a, 16b), wherein the data pairs (56, 56a, 56b) of a data group (54, 54a, 54b) belong to the same period cycle (18, 18a, 18b),
- assign a phase angle ($\varphi$) within the period cycle (18, 18a, 18b) to each data pair (56, 56a, 56b),
- assign the data groups (54, 54a, 54b) to individual poles (10, 10a, 10b) of the dimensional scale (8),
- calculate a first value of the Euclidean norm of the first and second trace signals (16a, 16b) from a first data pair (56a) of a first data group (54a),
- calculate a second value of the Euclidean norm from a second data pair (56b) of a second data group (54b), wherein the first and second data pairs (56b, 56b) coincide in the phase angle ($\varphi$), and the first and second data groups (54a, 54b) are assigned to adjacent poles (10a, 10b), and
- determine at least one period comparison value ($u$) based on a difference between the first and second values of the Euclidean norm.

7. Data processor (1) according to Claim 6, wherein the data processor (1) is configured to calculate differences from values of the Euclidean norm of the first and second trace signals (16a, 16b) for data pairs (56a, 56b) coinciding in phase angle (φ) from data groups (54a, 54b) of adjacent poles (10a, 10b) and to determine at least one period comparison value (u) based on these differences.

8. Data processor (1) according to any one of Claims 5 to 7, wherein the data processor (1) is configured to perform phase, offset, and/or amplitude adjustment of the first and second trace signals (16a, 16b) using values of the Euclidean norm of the first and second trace signals (16a, 16b).

9. Position measuring device (2) with a magnetic dimensional scale (8) consisting of consecutive poles (10, 10a, 10b) of alternating polarity (12a, 12b), a magnetic field sensor (14) for generating trace signals (16a, 16b) with period cycles (18, 18a, 18b) when passing the poles (10, 10a, 10b), and a data processor (1) according to any one of Claims 1 to 8.

10. Position measuring device (2) according to Claim 9, wherein the magnetic field sensor (14) is an AMR sensor and/or the magnetic field sensor (14) has a sensor length (30) that is smaller or equal to the pole length (32) of poles (10, 10a, 10b) of the dimensional scale (8).

11. Computer-implemented method for correcting a measurement error of a position measuring device (2) with a magnetic dimensional scale (8) consisting of consecutive poles (10, 10a, 10b) of alternating polarity (12a, 12b) and a magnetic field sensor (14) for generating trace signals (16a, 16b) with period cycles (18, 18a, 18b) when passing the poles (10, 10a, 10b),
wherein the method comprises

- retrieving measurement data (34) representing at least two period cycles (18a, 18b) of first and second trace signals (16a, 16b) of the magnetic field sensor (14) moving relative to the poles (10, 10a, 10b) of the dimensional scale (8),
- calculating at least one phase angle ($\varphi$) of the first and second trace signals (16a, 16b) for each of at least two period cycles (18a, 18b) and at least one characteristic parameter ($r$) characterizing the behavior of the first and second trace signals (16a, 16b) at this phase angle ($\varphi$) from the measurement data (34),
- determining at least one period comparison value ($u$), representing a cross-period difference in the behavior of the first and second trace signals (16a, 16b), based on a comparison of at least one part of the calculated characteristic parameters ($r$),
- determining a correction signal ($K$) from at least one period comparison value ($u$), wherein the correction signal ($K$) is a periodic function ($F$) or a superposition of periodic functions ($F$), each with an amplitude factor ($a$), a frequency factor ($f$), and a phase shift constant ($p$), wherein the amplitude factor ($a$) and the phase shift constant ($p$) are dependent on at least one period comparison value ($u$), and the frequency factor ($f$) remains constant and independent of at least one period comparison value ($u$),
- calculating an uncorrected position signal ($U$) from the measurement data (34), and
- calculating a corrected position signal ($P$) from the uncorrected position signal ($U$) and the correction signal ($K$).

**Revendications**

1. Processeur de données de mesure (1), pour un appareil de mesure de position (2) doté d'un étalon de mesure magnétique (8) constitué de pôles alignés (10, 10a, 10b) de polarité alternante (12a, 12b) et d'un détecteur magnétique (14) pour la génération de signaux de piste (16a, 16b) avec des passages de période (18, 18a, 18b) lors du passage des pôles (10, 10a, 10b), le processeur de données de mesure (1) étant conçu pour

   - consulter des données de mesure (34) représentatives d'au moins deux passages de période (18a, 18b) d'un premier et d'un second signal de piste (16a, 16b) du détecteur magnétique (14) déplacé à une fréquence polaire par rapport aux pôles (10, 10a, 10b),
   - calculer à partir des données de mesure (34), pour chacun des au moins deux passages de période (18a, 18b), au moins un angle de phase ($\varphi$) des premier et second signaux de piste (16a, 16b) et au moins une valeur caractéristique ($r$) caractérisant le trajet des premier et second signaux de piste (16a, 16b) pour cet angle de phase ($\varphi$),
   - déterminer, à l'aide d'une comparaison d'au moins une partie des valeurs caractéristiques calculées ($r$), au moins une valeur de comparaison de période ($u$) qui représente une différence toutes périodes confondues du trajet des premier et second signaux de piste (16a, 16b),
   - déterminer un signal de correction ($K$) à partir de la ou des valeurs de comparaison de période ($u$), le signal de correction ($K$) étant une fonction périodique ($F$) ou une superposition de fonctions périodiques ($F$) ayant chacune un facteur d'amplitude ($a$), un facteur de fréquence ($f$) et une constante de déphasage ($p$), le facteur d'amplitude ($a$) et la constante de déphasage ($p$) dépendant chacun de la ou des valeurs de comparaison de période ($u$), et le facteur de fréquence ($f$) étant une valeur constante indépendante de la ou des valeurs de comparaison de période ($u$),
   - calculer un signal de position non corrigé (34) à partir des données de mesure ($U$), et
   - calculer un signal de position corrigé ($P$) à partir du signal de position non corrigé ($U$) et du signal de correction ($K$).

2. Processeur de données de mesure selon la revendication 1, le processeur de données de mesure (1) étant conçu pour calculer le signal de position corrigé ($P$) en soustrayant le signal de correction ($K$) du signal de position non corrigé ($U$).

3. Processeur de données de mesure selon la revendication 1 ou 2, le premier signal de piste (16a) étant sensiblement sinusoïdal, le second signal de piste (16b) étant sensiblement cosinusoïdal, et/ou une fréquence de signal de piste des premier et second signaux de piste (16a, 16b) correspondant à la fréquence polaire.

4. Processeur de données de mesure selon l'une des revendications 1 à 3, dans le signal de correction ($K$), le facteur d'amplitude ($a$) respectif étant proportionnel à au moins une valeur de comparaison de période ($u$) et/ou la constante de déphasage ($p$) respective étant une fonction angulaire inverse de la ou des valeurs de comparaison de période ($u$) et/ou le facteur de fréquence ($f$) respectif étant un multiple impair de 0,5.

5. Processeur de données de mesure selon l'une des revendications 1 à 4, le processeur de données de mesure (1) étant conçu pour calculer des valeurs de la norme euclidienne des premier et second signaux de piste (16a, 16b) en fonction de l'angle de phase ($\varphi$) à partir des données de mesure (34) et les valeurs caractéristiques ($r$).

6. Processeur de données de mesure selon la revendication 5, le processeur de données de mesure (1) étant conçu pour

- répartir les données de mesure (34) en groupes de données (54, 54a, 54b), chaque groupe de données (54, 54a, 54b) comprenant plusieurs paires de données (56, 56a, 56b) qui représentent chacune une paire de valeurs de signal (58) des premier et second signaux de piste (16a, 16b), et les paires de données (56, 56a, 56b) d'un groupe de données (54, 54a, 54b) appartenant chacune au même passage de période (18, 18a, 18b),
- attribuer à chaque paire de données (56, 56a, 56b) un angle de phase ($\varphi$) à l'intérieur du passage de période (18, 18a, 18b),
- attribuer les groupes de données (54, 54a, 54b) aux différents pôles (10, 10a, 10b) de l'étalon de mesure (8),
- calculer une première valeur de la norme euclidienne des premier et second signaux de piste (16a, 16b) à partir d'une première paire de données (56a) d'un premier groupe de données (54a),
- calculer une seconde valeur de la norme euclidienne à partir d'une seconde paire de données (56b) d'un second groupe de données (54b), les première et seconde paires de données (56b, 56b) coïncidant dans l'angle de phase ($\varphi$), et les premier et second groupes de données (54a, 54b) étant attribués à des pôles adjacents (10a, 10b), et
- déterminer la ou les valeurs de comparaison de période (u) à l'aide d'une différence entre la première et la seconde valeur de la norme euclidienne.

7. Processeur de données de mesure selon la revendication 6, le processeur de données de mesure (1) étant conçu pour calculer, à partir de groupes de données (54a, 54b) de pôles voisins (10a, 10b) de plusieurs paires de données (56a, 56b) coïncidant dans l'angle de phase ($\varphi$), respectivement des différences à partir de leurs valeurs de la norme euclidienne des premier et second signaux de piste (16a, 16b) et déterminer la ou les valeurs de comparaison de période (u) à l'aide de ces différences.

8. Processeur de données de mesure selon l'une des revendications 5 à 7, le processeur de données de mesure (1) étant conçu pour effectuer une adaptation de phase, de décalage et/ou d'amplitude des premier et second signaux de piste (16a, 16b) et pour utiliser à cet effet des valeurs de la norme euclidienne des premier et second signaux de piste (16a, 16b).

9. Appareil de mesure de position (2) doté d'un étalon de mesure magnétique (8) constitué de pôles alignés (10, 10a, 10b) de polarité alternante (12a, 12b), d'un détecteur magnétique (14) pour la génération de signaux de piste (16a, 16b) avec des passages de période (18, 18a, 18b) lors du passage des pôles (10, 10a, 10b) et d'un processeur de données de mesure (1) selon l'une des revendications 1 à 8.

10. Appareil de mesure de position selon la revendication 9, le détecteur magnétique (14) étant un capteur AMR et/ou le détecteur magnétique (14) présentant une longueur de détection (30) qui est inférieure ou égale à la longueur de pôle (32) des pôles (10, 10a, 10b) de l'étalon de mesure (8).

11. Procédé mis en oeuvre par ordinateur pour corriger une erreur de mesure d'un appareil de mesure de position (2) doté d'un étalon de mesure magnétique (8) constitué de pôles alignés (10, 10a, 10b) de polarité alternante (12a, 12b) et d'un détecteur magnétique (14) pour la génération de signaux de piste (16a, 16b) avec des passages de période (18, 18a, 18b) lors du passage des pôles (10, 10a, 10b), le procédé comprenant les étapes consistant à

- consulter des données de mesure (34) représentant au moins deux passages de période (18a, 18b) des premier et second signaux de piste (16a, 16b) du détecteur magnétique (14) déplacé par rapport aux pôles (10, 10a, 10b) de l'étalon de mesure (8),
- calculer au moins un angle de phase ($\varphi$) des premier et second signaux de piste (16a, 16b) pour chacun des au moins deux passages de période (18a, 18b) et au moins une valeur caractéristique ($r$) caractérisant le trajet des premier et second signaux de piste (16a, 16b) pour cet angle de phase ($\varphi$) à partir des données de mesure (34),
- déterminer au moins une valeur de comparaison de période ($u$), qui représente une différence toutes périodes confondues du trajet des premier et second signaux de piste (16a, 16b), à l'aide d'une comparaison d'au moins une partie des valeurs caractéristiques calculées ($r$),
- déterminer un signal de correction ($K$) à partir de la ou des valeurs de comparaison de période ($u$), le signal de correction ($K$) étant une fonction périodique ($F$) ou une superposition de fonctions périodiques ($F$) ayant chacune un facteur d'amplitude ($a$), un facteur de fréquence ($f$) et une constante de déphasage ($p$), le facteur d'amplitude ($a$) et la constante de déphasage ($p$) dépendant chacun de la ou des valeurs de comparaison de période ($u$), et le facteur de fréquence ($f$) étant une valeur constante indépendante de la ou des valeurs de comparaison de période ($u$),
- calculer un signal de position non corrigé ($U$) à partir des données de mesure (34), et

- calculer un signal de position corrigé (*P*) à partir du signal de position non corrigé (*U*) et du signal de correction (*K*).

Fig. 1

EP 4 163 601 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3029427 A1
- DE 102020102065 B3
- US 2007205736 A1